# EUROPEAN PATENT APPLICATION

(11) **EP 4 600 931 A1**
(43) Date of publication of application: **13.08.2025**
(21) Application number: 23874705.9
(22) Date of filing: 25.09.2023
(51) Int. Cl.: G08G 1/00, B60W 40/02, B60W 60/00, G05D 1/43

(54) **MINING VEHICLE AUTONOMOUS TRAVEL SYSTEM**

(30) Priority: 06.10.2022 JP 2022161757
(71) Applicant: Hitachi Construction Machinery Co., Ltd., Tokyo 110-0015 (JP)
(72) Inventor: MACHII Kimiyoshi, Tokyo 100-8280 (JP); BANDO Mikio, Tokyo 100-8280 (JP); UOTSU Shinichi, Tsuchiura-shi, Ibaraki 300-0013 (JP); OCHI Satoru, Tsuchiura-shi, Ibaraki 300-0013 (JP)
(74) Representative: MERH-IP Matias Erny Reichl Hoffmann Patentanwälte PartG mbB
(86) International application number: PCT/JP2023/034792
(87) International publication number: WO 2024/075577

(57) **Abstract**

An object of the present invention is to provide a mining vehicle autonomous travel system capable of, in a case where a non-detection area occurs in an area to be detected by an external detection sensor, suppressing the work efficiency of a mining vehicle from being lowered by appropriately coping with a factor of the occurrence of the non-detection area. Therefore, a controller associates a three-dimensional point group acquired by an external detection sensor with a point group map, computes a change in a position of the external detection sensor on the basis of a measurement result of a vehicle position measurement sensor, extracts an area of the point group map as a non-detection area in a case where the external detection sensor is not able to acquire the three-dimensional point group to be acquired, judges a factor of the non-detection area on the basis of whether or not the position of the non-detection area in the point group map changes according to the change in the position of the vehicle, and decides an operation of the vehicle according to the factor of the non-detection area.

## Description

### Technical Field

The present invention relates to a mining vehicle autonomous travel system.

### Background Art

As a document that discloses the background art of the technical field, there is, for example, Patent Document 1. Patent Document 1 discloses "an external recognition system including a camera mounted on a vehicle and analyzing an image of the camera to recognize a state of surroundings of the vehicle on the basis of an analysis result of the image of the camera, the system including a dirtiness sensing section that senses whether or not dirt adheres to the camera, in which the dirtiness sensing section sets, as at least one reference line, at least a part of a line of an object that does not change on the image of the camera even when the vehicle moves, computes an observation line that corresponds to the reference line from the image of the camera, computes a displacement amount by which the observation line is displaced from the reference line, senses whether or not dirt adheres to the camera on the basis of the displacement amount, and computes an area of a region between the reference line and the observation line, to thereby compute the displacement amount of the observation line from the reference line."

### Prior Art Document

### Patent Document

Patent Document 1: Japanese Patent No. 6246014

### Summary of the Invention

### Problem to be Solved by the Invention

At a mining site, for example, a work machine such as an autonomous travel dump truck is used for the purpose of improving productivity. In the autonomous travel dump truck, in addition to operation management using control information, in order to ensure the safety of travelling, autonomous travelling of each autonomous travel dump truck is controlled by constantly grasping the surrounding situation during travelling and detecting the presence or absence of obstacles, other vehicles, and the like. In addition, in off-road environments such as a mining site, obstacles may not be able to be detected in some cases due to the effect of mud splashes, a puddle, and the like.

In contrast, when a LiDAR is used to detect an obstacle, in a case where there is a puddle, it is affected by light reflected by the puddle, and in a case where there is dirt on an irradiation surface of the LiDAR, it is affected by the dirt, and thus a non-detection area may occur in an area to be detected. Avoidance is required in a case where a puddle is present, and cleaning is required in a case where there is dirt on the irradiation surface. However, the factors of the non-detection areas in both cases cannot be distinguished from each other, and when the non-detection area occurs, it is difficult to automatically determine the factor of the occurrence. In such a case, it is necessary for an operator to stop the dump truck every time and then check on the spot, and the work efficiency is lowered.

Patent Document 1 discloses a technique for computing a displacement amount of a luminance value on the observation line with an object (a bumper or the like) that does not change on the image of the camera even when the vehicle moves as a reference, and determining whether or not dirt adheres to the camera on the basis of the displacement amount. The disclosed technique is a technique established on the assumption that a part of the vehicle always appears in the same place on the image and that the vehicle always travels on a paved road. On the other hand, since the environments around the vehicle change moment by moment in a mining environment, it is not always appropriate to use a parameter, such as the displacement amount of the luminance value, that regularly changes.

The present invention has been made in view of the above-described problems, and an object thereof is to provide a mining vehicle autonomous travel system capable of, in a case where a non-detection area occurs in an area to be detected by an external detection sensor, preventing the work efficiency of a mining vehicle from being lowered by appropriately coping with a factor of the occurrence of the non-detection area.

### Means for Solving the Problem

In order to achieve the object described above, the present invention provides a mining vehicle autonomous travel system including: an external detection sensor that acquires a three-dimensional point group of surrounding environments of a vehicle; a position measurement sensor that is attached to the vehicle; and a controller to which signals of the external detection sensor and the position measurement sensor are input. The controller has a point group map generation section that associates the three-dimensional point group acquired by the external detection sensor with a point group map, a sensor position change computation section configured to compute a change in position of the external detection sensor on the basis of a measurement result of the position measurement sensor, and a non-detection area sensing section that extracts, in a case where the external detection sensor is not able to acquire the three-dimensional point group to be acquired, an area of the point group map as a non-detection area. The controller has a non-detection area factor judgement section that judges a factor of the non-detection area on the basis of whether or not a position of the non-detection area in the point group map changes according to a change in position of the vehicle, and an action decision section that decides an action of the vehicle according to the judgement result of the non-detection area factor judgement section.

According to the present invention configured as described above, in a case where a non-detection area occurs in an area to be detected by the external detection sensor, it is possible to prevent the work efficiency of the mining vehicle from being lowered by allowing the mining vehicle to perform an appropriate action according to the factor of the non-detection area.

### Advantages of the Invention

According to the present invention, in a case where a non-detection area occurs in an area to be detected by an external detection sensor, it is possible to prevent the work efficiency of a mining vehicle from being lowered by appropriately coping with a factor of the occurrence of the non-detection area.

### Brief Description of the Drawings

FIG. 1 is a schematic view of a mining vehicle.
FIG. 2 is a configuration diagram of a travel control system mounted on the mining vehicle.

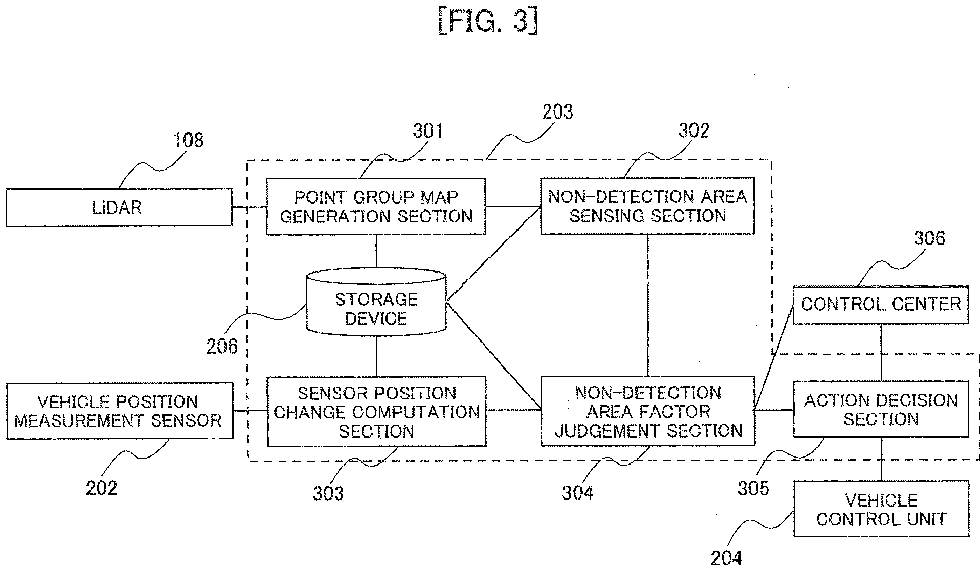

FIG. 3 is a functional block diagram of a controller.
FIG. 4 is a diagram depicting an example of a coordinate system.
FIG. 5 is a flowchart indicating processing of a mining vehicle autonomous travel system.
FIG. 6 is a flowchart indicating details of processing for sensing a non-detection area.
FIGS. 7A and 7B are diagrams each illustrating a detectable range of a LiDAR.
FIG. 8 is a flowchart indicating details of processing for judging a factor of the non-detection area.
FIG. 9 is a flowchart indicating details of processing for tracking the non-detection area.
FIG. 10 is a flowchart indicating details of processing for determining the factor of the non-detection area.
FIGS. 11A to 11C are diagrams each illustrating the concept of processing for judging the factor of the non-detection area.
FIGS. 12A to 12H are diagrams of specific examples of processing in which non-detection cells are grouped into a non-detection area.
FIG. 13 is a diagram depicting a data structure of a registration buffer.
FIG. 14 is a flowchart indicating details of processing for deciding an action of the vehicle according to the factor of the non-detection area.
FIG. 15 is a flowchart indicating details of processing for deciding an action of the vehicle in a case where the factor of the non-detection area is dirt on an irradiation surface of the LiDAR.
FIGS. 16A and 16B are diagrams each illustrating a method of changing a course.
FIG. 17 is a flowchart indicating processing for deciding an action of the vehicle in a case where the factor of the non-detection area is a puddle.
FIG. 18 is a diagram depicting a scene in which a puddle is present within a route range.
FIG. 19 is a diagram depicting an example of a point group map created using the vertical irradiation angle and the horizontal irradiation angle of the LiDAR.

### Mode for Carrying Out the Invention

Hereinafter, an embodiment of the present invention will be described with reference to the drawings. It should be noted that, in each of the drawings, equivalent elements are denoted by the same reference signs, and repeated descriptions thereof are appropriately omitted.

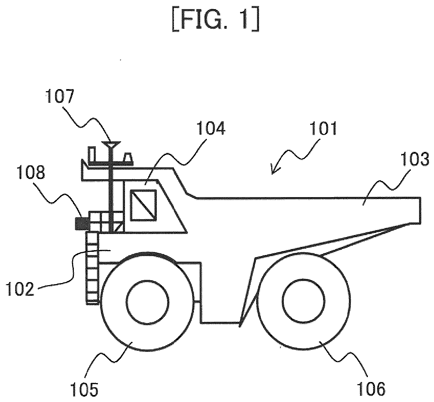

FIG. 1 is a schematic diagram of a mining vehicle 101 in the present embodiment. In FIG. 1, the mining vehicle 101 is provided with a vehicle body 102, a vessel 103 that is rotatably attached in an up-down direction on an upper rear side of the vehicle body 102, a driver seat 104 provided on an upper front side of the vehicle body 102, a pair of left and right driven wheels 105 attached on a lower front side of the vehicle body 102, and a pair of left and right driving wheels 106 attached on a lower rear side of the vehicle body 102. A GNSS (Global Navigation Satellite System) 107 is attached on the upper front side of the vehicle body 102 as a vehicle position measurement sensor. The GNSS 107 measures a position of the vehicle body 102 by using satellite radio waves of a GPS (Global Positioning System) and the like. A LiDAR 108 is attached on a front side of the vehicle body 102 as an external detection sensor.

The LiDAR 108 has a configuration of applying a laser beam from the vehicle 101 to acquire data by using reflected waves. The LiDAR 108 has viewing angles unique to a model in a horizontal direction and a vertical direction, and applies a plurality of laser beams in the viewing angles to obtain data such as the three-dimensional coordinates and the reflection intensity of the positions where the laser beams are reflected by using the reflected waves. This data is generally called point group data. Unlike cameras, the LiDAR 108 can obtain the point group data independent of ambient brightness and can detect objects regardless of day or night or weather.

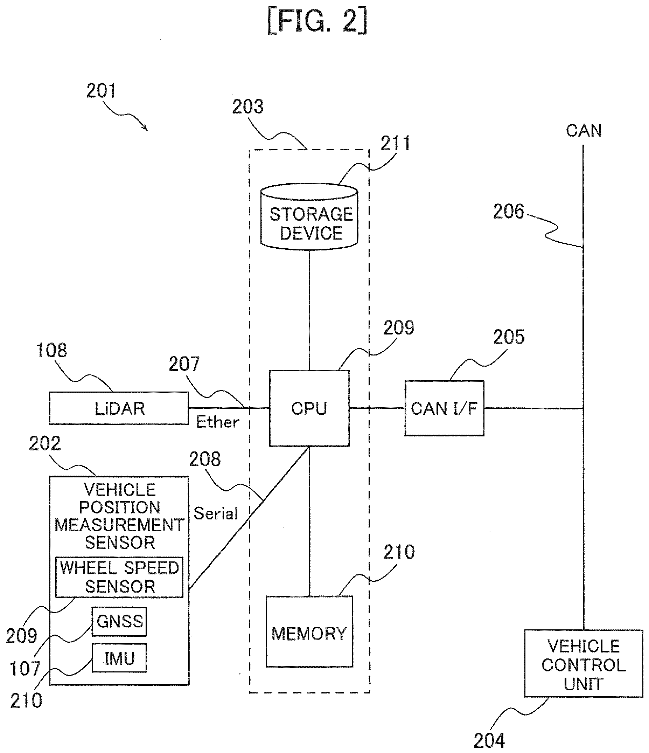

FIG. 2 is a configuration diagram of a travel control system mounted on the mining vehicle 101. A travel control system 201 is provided with the LiDAR 108, a vehicle position measurement sensor 202, a controller 203, and a vehicle control unit 204. The controller 203 is connected to the vehicle control unit 204 via a CAN interface 205 and a CAN bus 206, is connected to the LiDAR 108 via an Ethernet line 207, and is connected to the vehicle position measurement sensor 202 via a serial line 208.

The controller 203 is provided with a CPU 209, a memory 210, and a storage device 211. The storage device 211 stores map data, data necessary for automatic driving, values of calibration parameters of the LiDAR 108, and the like.

The vehicle position measurement sensor 202 is a sensor for measuring the position of the vehicle 101, and includes a wheel speed sensor 209, the GNSS 107, and an IMU (Inertial Measurement Unit) 210. The wheel speed sensor 209 and the IMU 210 are devices for self-position estimation on the basis of dead reckoning and function even in a situation where the GNSS 107 cannot receive satellite radio waves. By using these devices in combination, it is possible to measure the vehicle position in various situations.

The CPU 209 processes the point group data obtained by the LiDAR 108 according to the vehicle position information from the vehicle position measurement sensor 202, and stores data required in the process and a processing result in a memory 210. Then, the information regarding the processing result is sent to the vehicle control unit 204 via the CAN interface 205 and the CAN bus 206. The vehicle control unit 204 controls an advancing direction and speed of the vehicle 101 according to the processing result of the CPU 209. In addition, the vehicle control unit 204 creates and stores dead reckoning information of the advancing direction and speed of the vehicle 101. The controller 203 can acquire these pieces of information via the CAN bus 206 and the CAN interface 205.

FIG. 2 is a functional block diagram of the controller 203. The controller 203 has a point group map generation section 301, a non-detection area sensing section 302, a sensor position change computation section 303, a non-detection area factor judgement section 304, and an action decision section 305 as functions realized by software.

The point group map generation section 301 creates a map by expanding the point group data obtained from the LiDAR 108 into a two-dimensional plane. As the map, an occupancy grid map (OGM) is preferably used. The point group map generation section 301 converts each point group coordinate to the position of a cell in the grid map and sets a flag indicating the presence of a point group in the cell.

The non-detection area sensing section 302 uses the point group map to specify a cell area where the LiDAR 108 has not been able to acquire the point group data among the cell areas corresponding to the point group data that the LiDAR 108 should acquire (that can originally be acquired by the LiDAR 108). Factors of the non-detection area are dirt on an irradiation surface of the LiDAR 108, a puddle on the road surface, occlusion by obstacles, dust, and the like. Due to these factors, the cells where no point group is present occur in the point group map. The non-detection area is sensed by grouping them.

It should be noted that the point group of the LiDAR 108 is discrete, and intervals between the points become wider on the farther side, and the non-detection area occurs even at this time. However, it is possible to avoid this by accumulating, for example, the point group data for the latest one second. At this time, the obtained point group data may be converted to a global coordinate system, and all the accumulated point group data may be converted to a relative position from the LiDAR 108 and then converted to cell coordinates. Alternatively, for the purpose of reducing the data capacity and making the processing faster, only the information of the cell where the point group is present in the point group map may be accumulated, and the cell coordinates may be converted to the relative position from the LiDAR 108 on the basis of a change in the vehicle position. Then, the obtained information of the non-detection area is accumulated in the storage device 211 such that the change in the position of the non-detection area can be recognized.

The sensor position change computation section 303 computes the change in the position of the LiDAR 108 on the basis of the result of the vehicle position measurement sensor 202. This is a relative position change from the position of the LiDAR 108 at the time of the previous measurement, and a moving direction and a moving speed are computed.

The non-detection area factor judgement section 304 judges the factor of the non-detection area sensed by the non-detection area sensing section 302. Specifically, one of dirt, a puddle, occlusion, and dust is to be judged. In addition, the barycentric coordinates of the non-detection area are also calculated. The non-detection area factor judgement section 304 judges the factor of the non-detection area by using the positional relation between the non-detection areas at the previous time and the current time on the basis of the history of the sensing of the non-detection areas accumulated in the storage device 211 and the position change obtained by the sensor position change computation section 303.

A control center 306 controls traffic and issues instructions on a destination and a travelling route in a mining site. In order to issue an instruction on a travelling route, the control center 306 obtains information regarding obstacles and bad roads detected by each vehicle 101 in the mining site, generates a route for avoiding them, and transmits it to the vehicle 101. In addition, in a case where dirt on the irradiation surface of the LiDAR 108 is detected in each vehicle 101, an instruction for stopping and cleaning is issued according to the situation.

The action decision section 305 decides an action of the vehicle 101 according to the factor of the non-detection area obtained by the non-detection area factor judgement section 304. Specifically, in the case of a puddle, it is decided to cross, avoid, or stop. In the case of dirt, it is decided either to stop according to a dirty place or to travel by using a range that is not dirty.

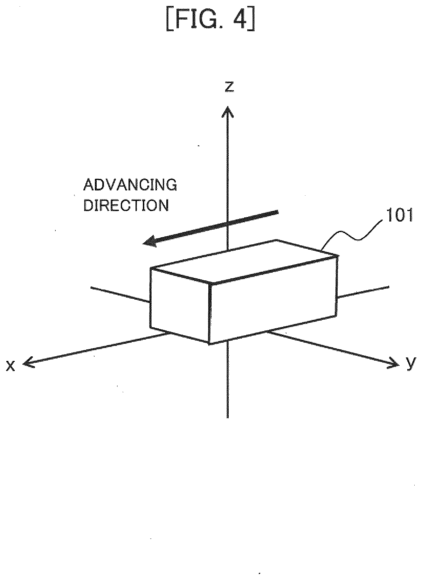

FIG. 4 is a diagram depicting an example of a coordinate system used in the present embodiment. In the present embodiment, a coordinate system using the position of the vehicle 101 as the origin is used, and the advancing direction of the vehicle 101 is an x-axis, a direction perpendicular to the x-axis and along the vehicle width direction is a y-axis, and a direction perpendicular to the road surface is a z-axis. It should be noted that a direction from right to left toward the advancing direction of the vehicle 101 is positive in the y-axis.

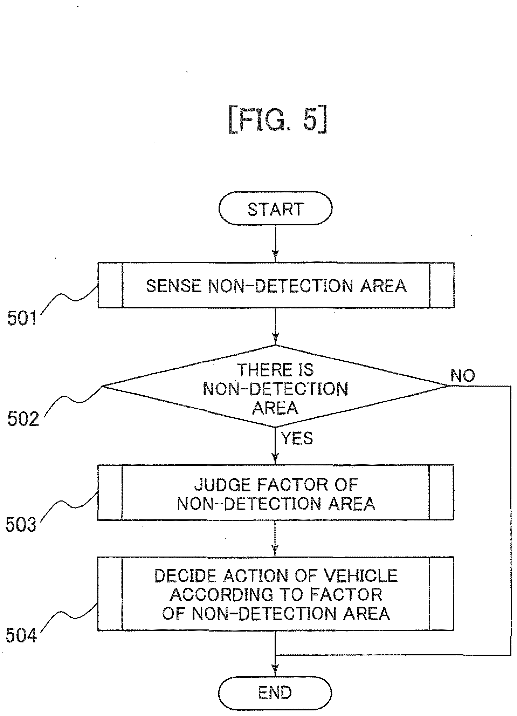

FIG. 5 is a flowchart indicating processing of a mining vehicle autonomous travel system in the present embodiment. First, a non-detection area is sensed in Step 501. The processing of Step 501 is executed by the point group map generation section 301 and the non-detection area sensing section 302. Following Step 501, it is determined in Step 502 whether or not there is a non-detection area. In a case where the determination result in Step 502 is No, the flow is terminated. In a case where the determination result in Step 502 is Yes, the factor of the non-detection area is judged in Step 503. The processing of Steps 502 and 503 is executed by the non-detection area factor judgement section 304. Following Step 503, the action of the vehicle 101 according to the factor of the non-detection area is decided in Step 504, and the flow is terminated. The processing of Step 504 is executed by the action decision section 305.

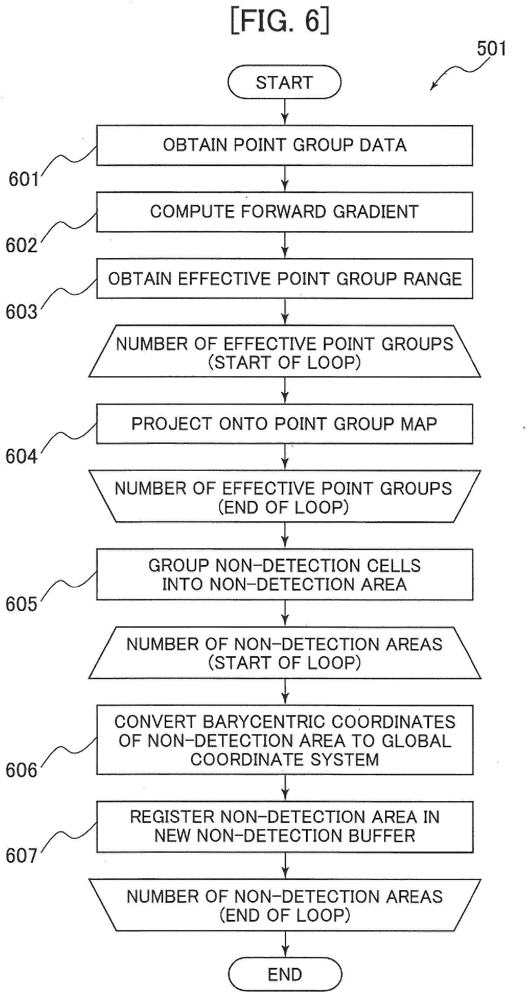

FIG. 6 is a flowchart indicating details of the processing (Step 501 in FIG. 5) for sensing a non-detection area. First, point group data for a certain period of time is obtained from the LiDAR 108 in Step 601. Following Step 601, a forward gradient of the vehicle 101 is computed in Step 602. In computing the forward gradient, for example, RANSAC (RANdom Sampling Consensus) is preferably used. Following Step 602, the range of an effective point group obtained from the LiDAR 108 is obtained in Step 603.

Here, the necessity of the processing of Step 602 and Step 603 will be described. Even in a case where there is an obstacle that is high in height or an upward slope on the front side, the LiDAR 108 is preferably installed in such a manner that no non-detection area occurs. At this time, in a case where the road surface is flat and there is no obstacle on the front side, the laser beam applied from the upper part of the vertical viewing angle of the LiDAR 108 does not hit anywhere, and there is a possibility that the point group cannot be obtained. Therefore, such a non-detection area is not to be processed, and the point groups obtained in other areas are to be processed.

Following Step 603, the flow enters a loop of the number of effective point groups, and Step 604 is executed for each effective point group. In Step 604, the effective point group is projected onto the point group map. The processing of Steps 602 to 604 is executed by the point group map generation section 301. After the flow exits the loop of the number of effective point groups, non-detection cells are grouped into a non-detection area in Step 605. Following Step 605, the flow enters a loop of the number of non-detection areas, and Steps 606 and 607 are executed for each non-detection area. In Step 606, the barycentric coordinates of the non-detection area are calculated and converted to a global coordinate system. In Step 607 that follows, information of the non-detection area is registered in a new non-detection buffer. When the flow exits the loop of the number of non-detection areas, the flow is terminated. The processing of Steps 605 to 607 is executed by the non-detection area sensing section 302.

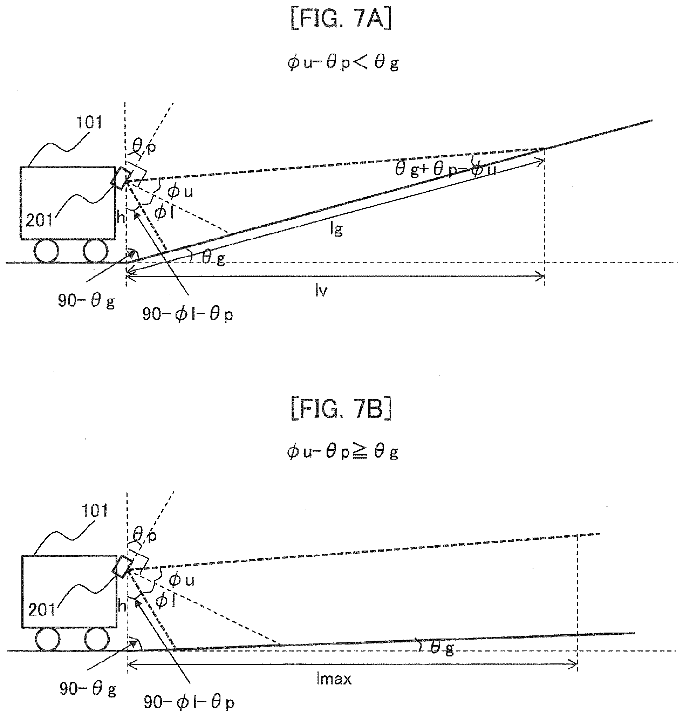

Here, in relation to the processing of Steps 602 and 603, an area where no point group is obtained will be described with reference to FIGS. 7A and 7B. FIG. 7A depicts a situation in which an upward slope is present in front of the vehicle 101. The installation pitch angle of the LiDAR 108 is θp, the viewing angle on an upper side relative to a line perpendicular to the irradiation surface of the LiDAR 108 is øu, the viewing angle on a lower side relative to the line is ø1, the gradient of the road surface of the upward slope is θg, and the installation height of the LiDAR 108 is h.

A maximum detection distance lv by the LiDAR 108 can be calculated by using an inclined plane length lg as lv = lg × cos(θg). The inclined plane length lg can be calculated by using the sine theorem. In a case where a point where the laser beam of the upper limit of the viewing angle of the LiDAR 108 reaches is present on the inclined plane, the angle between the laser beam and the inclined plane is θg + θp - øu. When the angle is positive, point groups can be obtained from all the laser beams even if there is an upward slope on the front side. That is, when the upper limit irradiation angle (øu - θp) of the LiDAR 108 viewed from the horizontal plane is smaller than a road surface gradient (θg), point groups can be obtained from all the laser beams.

In contrast, FIG. 7B depicts a case where no point group can be obtained from the laser beam at the upper part of the irradiation surface, that is, a case where øu - θp ≥ θg is satisfied. At this time, if there is no obstacle on the front side, no point group can be obtained at least from the laser beam whose viewing angle of the LiDAR 108 is larger than øu - θp - θg. In an actual operation, however, it is preferable that a maximum detection distance lmax is set and a point group that is located shorter than the maximum detection distance is to be processed.

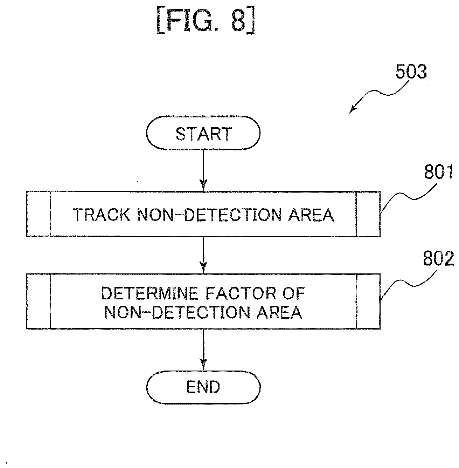

FIG. 8 is a flowchart indicating details of the processing (Step 503 in FIG. 5) for judging the factor of the non-detection area. First, a non-detection area is tracked in Step 801. Specifically, the position of the non-detection area in each time series is tracked by use of a Kalman filter or the like. Following Step 801, the factor of the non-detection area is determined on the basis of the tracking result of the non-detection area in Step 802.

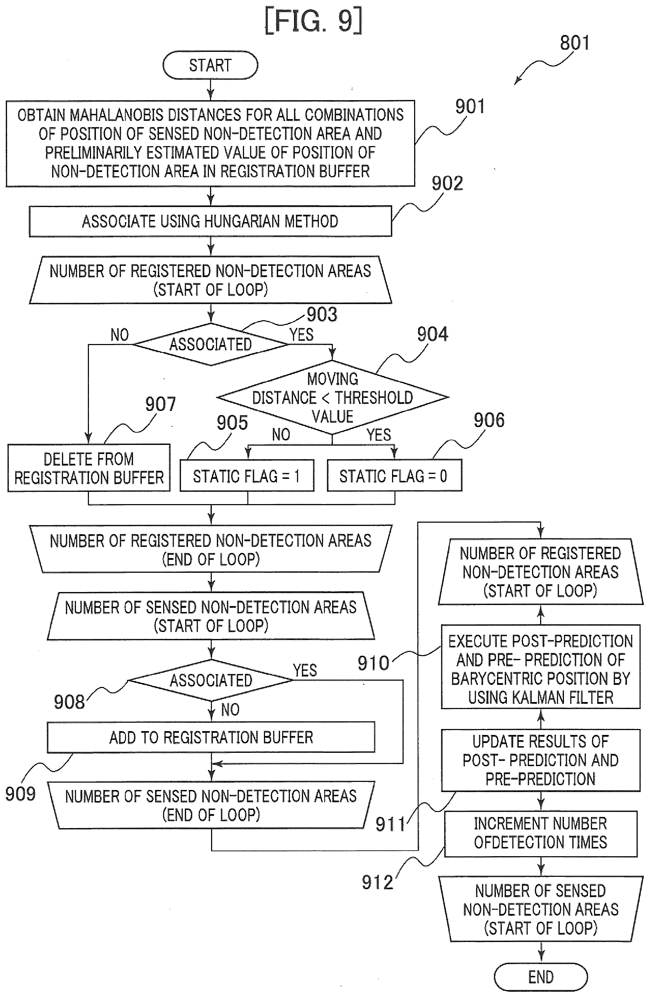

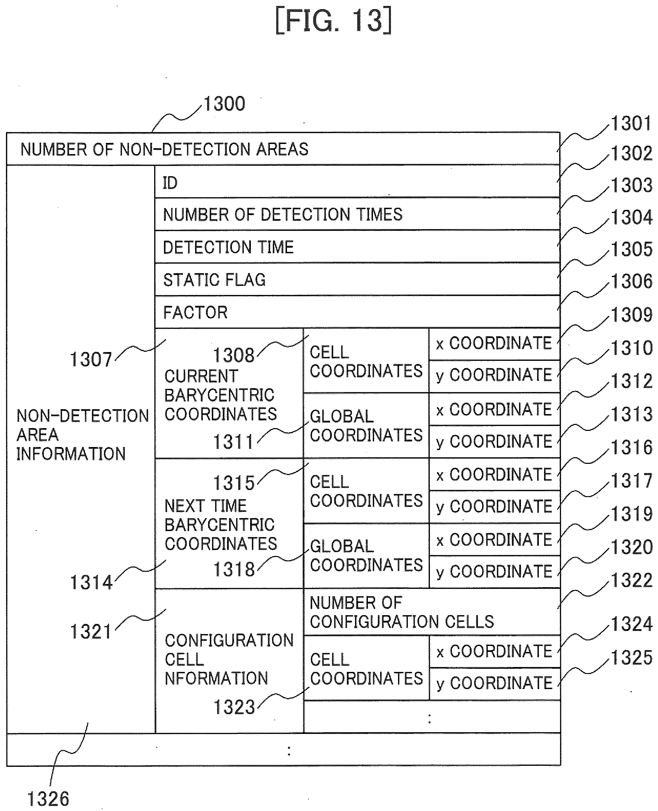

FIG. 9 is a flowchart indicating details of the processing (Step 801 in FIG. 8) for tracking the non-detection area. First, in Step 901, Mahalanobis distances are obtained for all combinations of the barycentric position of the non-detection area sensed at that time and a preliminarily estimated value (next time barycentric coordinates 1314) of the barycentric position of the non-detection area stored in a registration buffer 1300 (depicted in FIG. 13) described later and sensed in the past. Following Step 901, they are associated with each other in Step 902. In Step 902, it is preferred to create a cost matrix for each combination and use the Hungarian method to obtain the optimal combination. It should be noted that, in Steps 901 and 902, the association may be performed by use of a Euclidean distance, but in consideration of the fact that the vehicle 101 cannot move in a lateral direction, the Mahalanobis distance, which can emphasize the distance in the advancing direction, is preferable.

Following Step 902, the flow enters a loop of the non-detection area registered in the registration buffer 1300, and the processing of Step 903 and thereafter is executed for each registered non-detection area. In Step 903, it is determined whether or not there is a registered non-detection area associated in Step 902. In a case where the determination result in Step 903 is Yes, it is determined in Step 904 whether or not a moving distance is smaller than a threshold value. The moving distance may be a difference between the position of the registered non-detection area at the previous time and the position of the associated sensed non-detection area. In a case where the determination result in Step 904 is No, a static flag 1305 of the registration buffer 1300 is set to 1 in Step 905. In a case where the determination result in Step 904 is Yes, the static flag 1305 is set to 0 in Step 906. In a case where the determination result in Step 903 is No, it can be judged that the registered non-detection area has moved out of the field of view of the LiDAR 108 or disappeared, and thus the registered non-detection area is deleted from the registration buffer 1300 in Step 907.

Following Steps 905 to 907, the flow enters a loop of the number of sensed non-detection areas, and the processing of Step 908 and thereafter is executed for each sensed non-detection area. In Step 908, it is determined whether or not the sensed non-detection area is associated with the registered non-detection area. In a case where the determination result in Step 908 is Yes, since the sensed non-detection area has already been registered in the registration buffer 1300, no processing is performed. In a case where the determination result in Step 908 is No, the sensed non-detection area is registered in the registration buffer 1300 in Step 909 because it can be regarded as a non-detection area appearing for the first time.

When the flow exits the loop of the number of sensed non-detection areas, the flow enters the loop of the number of registered non-detection areas again. In the loop of the number of registered non-detection areas, Steps 910 to 912 are executed for each registered non-detection area. In this loop, a non-detection area is tracked by use of a Kalman filter. In Step 910, the Kalman filter is used to execute a post-prediction and a pre-prediction of the barycentric position of the non-detection area. In Step 911 that follows, the post-prediction result (current barycentric coordinates 1307) and the pre-prediction result (next time barycentric coordinates 1314) of the registration buffer 1300 are updated. In Step 912 that follows, the number of detection times 1303 of the registration buffer 1300 is incremented. When the flow exits the loop of the number of registered non-detection areas, the flow is terminated.

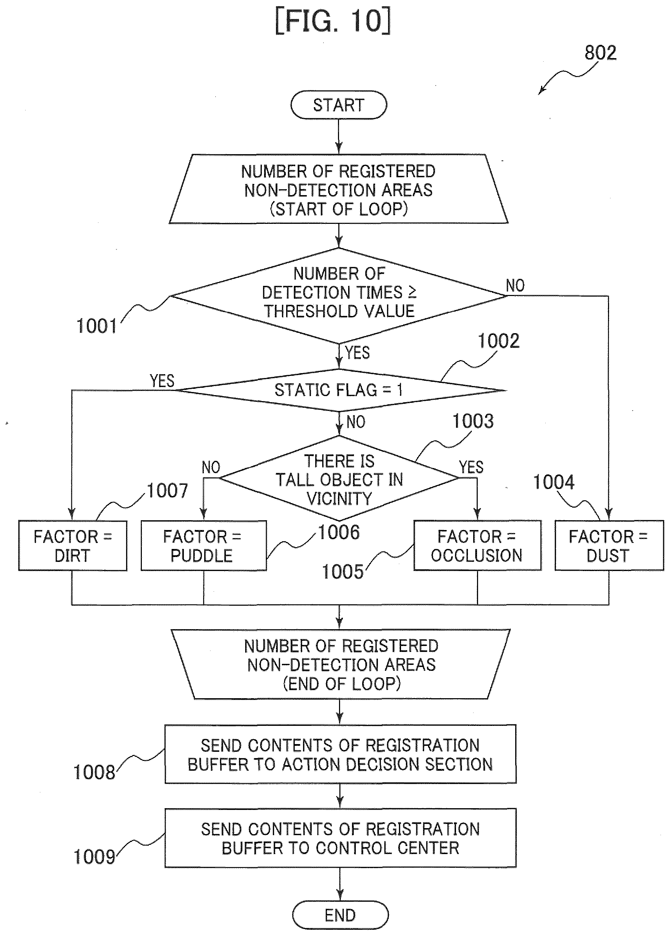

FIG. 10 is a flowchart indicating details of the processing (Step 802 in FIG. 8) for determining a factor 1306 of the non-detection area. First, the flow enters a loop of the number of non-detection areas (the number of registered non-detection areas) of the registration buffer 1300, and the processing of Step 1001 and thereafter is executed for each non-detection area.

In Step 1001, it is compared whether or not the number of detection times 1303 of the non-detection area is equal to or larger than a threshold value. In a case where the determination result in Step 1001 is No, the factor 1306 of the non-detection area is determined as dust in Step 1004. In a case where the determination result in Step 1001 is Yes, it is determined in Step 1002 whether or not the static flag 1305 is 1. In a case where the determination result in Step 1002 is Yes, the factor 1306 of the non-detection area is determined as dirt in Step 1007. In a case where the determination result in Step 1002 is No, it is determined in Step 1003 whether or not there is a tall object in the vicinity of the non-detection area. In a case where the determination result in Step 1002 is Yes, the factor 1306 of the non-detection area is determined as occlusion in Step 1005. In a case where the determination result in Step 1002 is No, the factor 1306 of the non-detection area is determined as a puddle in Step 1006.

When the flow exits the loop of the number of registered non-detection areas, the contents of the registration buffer 1300 are sent to the action decision section 305 in Step 1008. Following Step 1008, the contents of the registration buffer 1300 are sent to the control center 306 in Step 1009, and the flow is terminated.

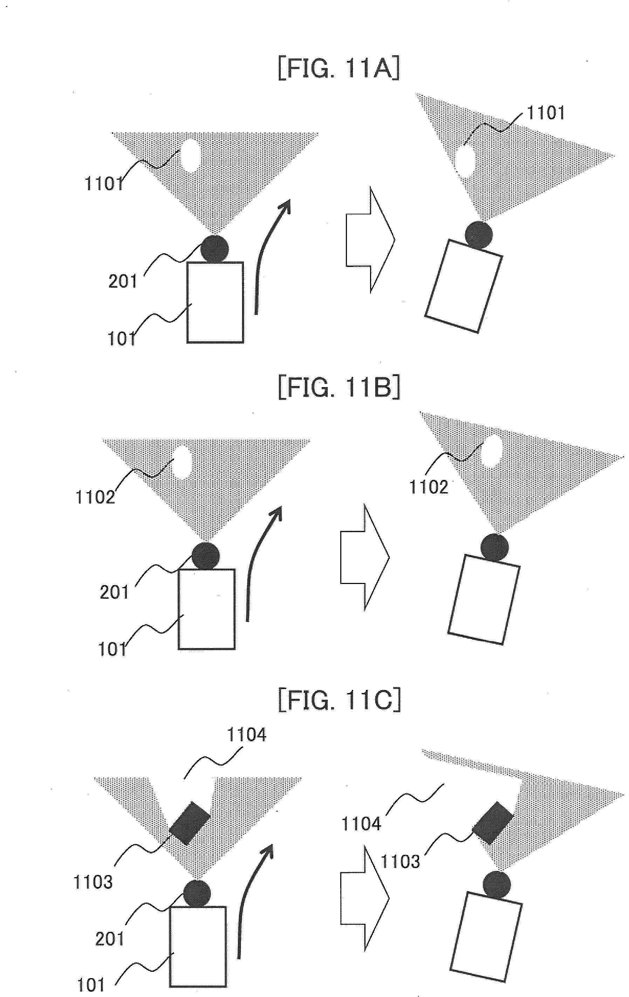

The concept of the processing of the non-detection area factor judgement section 304 described here will be described with reference to FIGS. 11A to 11C. FIG. 11A depicts a case where a non-detection area 1101 is a puddle and a scene in which the vehicle 101 is travelling in a direction indicated by the arrow. In the case of a puddle, the position of the non-detection area 1101 on the road surface does not change, and the relative positional relation with the LiDAR 108 changes. That is, the relative positional relation between the own vehicle and the non-detection area changes according to the change in the position of the vehicle 101.

FIG. 11B depicts a case where the factor of a non-detection area 1102 is dirt on the irradiation surface and a scene in which the vehicle 101 is travelling in a direction indicated by the arrow. In the case of dirt, even if the vehicle 101 moves, the relative positional relation between the vehicle 101 and the non-detection area 1102 does not change.

FIG. 11C depicts a case where the factor of a non-detection area 1104 is occlusion of an obstacle 1103 and a scene in which the vehicle 101 is travelling in a direction indicated by the arrow. In the case of occlusion, the change in the position of the non-detection area 1104 on the road surface is small. At this time, it is difficult to distinguish from the puddle in FIG. 11A, but in the case of occlusion, it is possible to distinguish on the basis of whether or not the obstacle 1103 is present short of the non-detection area 1104. The non-detection area factor judgement section 304 uses the characteristics described above to judge the factor of the non-detection area.

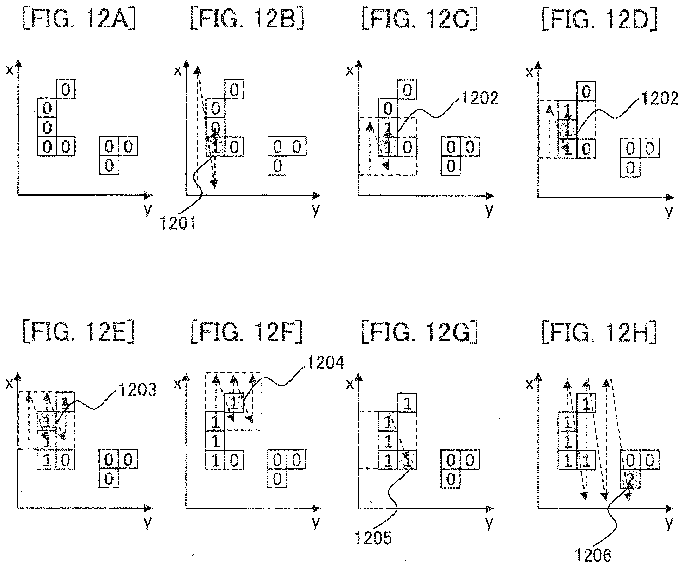

FIGS. 12A to 12H depict specific examples of the processing (Step 605 in FIG. 6) in which non-detection cells are grouped into a non-detection area. A state of FIG. 12A represents the initial state of the point group map, and the cell containing the number "0" is a non-detection cell. First, the point group map is scanned in the state of FIG. 12A, and a cell 1201 is found as a non-detection cell in a state of FIG. 12B. This becomes the starting point of grouping, and the ID 1302 of the non-detection area to which the cell 1201 belongs is set to 1.

Next, eight neighborhoods around the cell 1201 are searched, and if a non-detection cell is found, it is included in the same non-detection area. In a state of FIG. 12C, a cell 1202 is found as a non-detection cell and is added as a configuration cell of the ID 1302=1.

Hereinafter, eight neighborhoods are recursively searched, and eight neighborhoods around the cell 1202 are searched in a state of FIG. 12D. Then, a cell 1203 is found as a non-detection cell in a state of FIG. 12E and is added as a configuration cell of the ID 1302=1. Further, eight neighborhoods around the cell 1203 are searched, and a cell 1204 is found as a non-detection cell in a state of FIG. 12F and is added as a configuration cell of the ID 1302=1. Further, eight neighborhoods around the cell 1204 are searched. Since no non-detection cells other than the already grouped cells are found therearound, eight neighborhoods around the cell 1203 are searched again. Since no non-detection cells other than the already grouped cells are also found therearound, eight neighborhoods around the cell 1202 are searched again. Then, a cell 1205 is found as a non-detection cell in a state of FIG. 12G and is added as an element of the ID 1302=1. Further, eight neighborhoods around the cell 1201 are searched. Since no non-detection cells other than the already grouped cells are also found therearound, eight neighborhoods around the cell 1201 are searched. Since no non-detection cells other than the already grouped cells are found therearound, eight neighborhoods around the cell 1205 are searched. No non-detection cells other than the already grouped cells are found therearound. As a result, the grouping of all the non-detection cells found in the search using the cell 1201 as the base point is completed, and the non-detection areas having the ID 1302=1 are fixed.

Next, the group number is incremented to continue the search of non-detection cells. Then, a cell 1206 is found as a non-detection cell in a state of FIG. 12H and becomes an element of a group ID 1302=2. Hereinafter, the processing described sofar is repeated to group the non-detection cells.

FIG. 13 is a diagram depicting the contents of the registration buffer 1300 stored in the storage device 211. The registration buffer 1300 includes the number of non-detection areas 1301 and non-detection area information 1326 corresponding to the number indicated by the number of non-detection areas 1301.

The non-detection area information 1326 includes an ID 1302, the number of detection times 1303, a detection time 1304, a static flag 1305, a factor 1306, current barycentric coordinates 1307, next time barycentric coordinates 1314, and configuration cell information 1321.

The ID 1302 is the ID of the non-detection area and is assigned according to the processing depicted in FIGS. 12A to 12H. The number of detection times 1303 indicates the number of times the non-detection area has been detected. The detection time 1304 is the time when the non-detection area has been first detected. The static flag 1305 is a flag indicating that the non-detection area is static within the field of view of the LiDAR 108, is given by the non-detection area factor judgement section 304 and is set to 0 or 1 in Step 905 or Step 906 in FIG. 9.

The current barycentric coordinates 1307 are coordinates where the non-detection area is present at the present time and include cell coordinates 1308 and global coordinates 1311. The cell coordinates 1308 are cell coordinates in the point group map, and the global coordinates 1311 are coordinates in the global coordinate system. In addition, they include an x coordinate 1309 and a y coordinate 1310, and an x coordinate 1312 and a y coordinate 1313, respectively.

The next time barycentric coordinates 1314 are coordinates of a position where the non-detection area is predicted to be present at the next time and include cell coordinates 1315 and global coordinates 1318. The cell coordinates 1315 are cell coordinates in the point group map, and the global coordinates 1318 are coordinates in the global coordinate system. In addition, they are configured with an x coordinate 1316 and a y coordinate 1317, and an x coordinate 1319 and a y coordinate 1320.

The configuration cell information 1321 is information of cells constituting the non-detection area and includes the number of configuration cells 1322 and cell coordinates 1323. The cell coordinates 1323 are stored as many as the number of configuration cells 1322. The cell coordinates 1323 include an x coordinate 1324 and a y coordinate 1325.

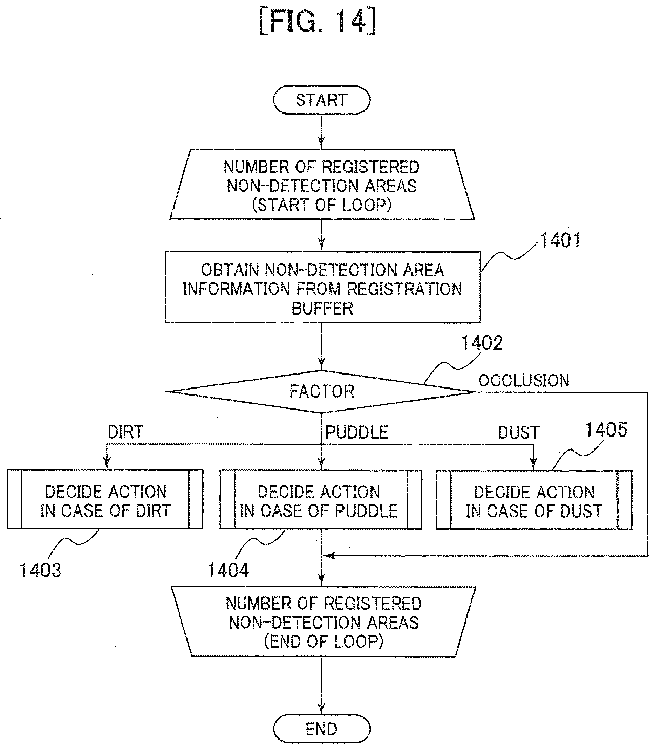

FIG. 14 is a flowchart indicating details of the processing (Step 504 in FIG. 5) for deciding the action of the vehicle 101 according to the factor of the non-detection area. First, the flow enters a loop of the number of non-detection areas 1301 stored in the registration buffer, and the processing of Step 1401 thereafter is executed for each non-detection area.

In Step 1401, the non-detection area information 1326 is obtained from the registration buffer 1300. In Step 1402 that follows, the factor 1306 is determined. In a case where the factor 1306 is dirt, the action of the vehicle 101 is decided in Step 1403. In a case where the factor 1306 is a puddle, the action of the vehicle 101 is decided in Step 1404. In a case where the factor 1306 is dust, the action of the vehicle 101 is decided in Step 1405. When the flow exits the loop of the number of non-detection areas, the flow is terminated.

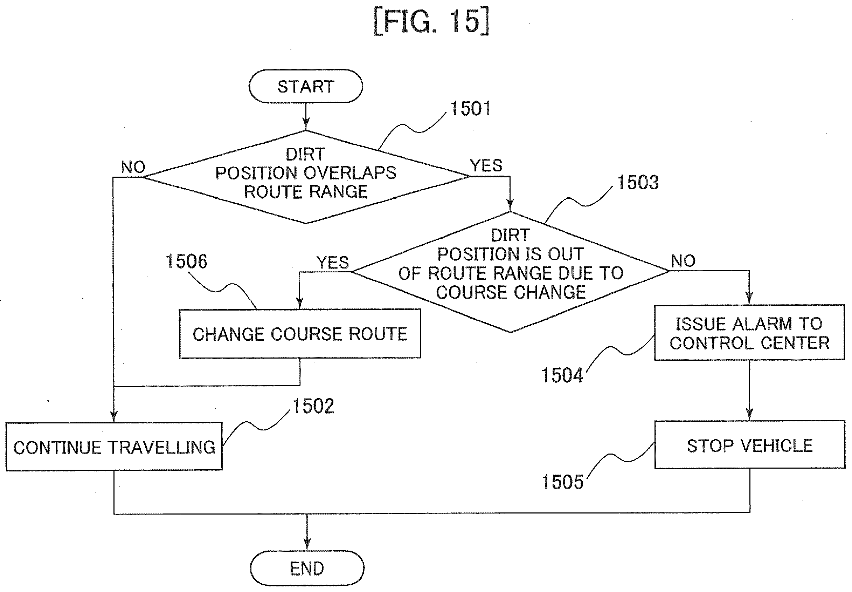

FIG. 15 is a flowchart indicating details of the processing (Step 1403 in FIG. 14) for deciding the action of the vehicle 101 in a case where the factor of the non-detection area is dirt on the irradiation surface of the LiDAR 108. First, in Step 1401, it is determined whether or not the dirt position overlaps the route range. This is equivalent to determining whether or not the non-detection area 1102 appears to be present in the route range. In a case where the determination result in Step 1501 is No, the travelling is continued as it is in Step 1502, and the flow is terminated.

In a case where the determination result in Step 1501 is Yes, it is determined in Step 1503 whether or not the dirt position is out of the route range due to course change of the vehicle 101. In a case where the determination result in Step 1503 is No, an alarm is issued to the control center 306 in Step 1504, the vehicle 101 is stopped in Step 1505 that follows, and the flow is terminated. In a case where the determination result in Step 1503 is No, the course change is changed in Step 1506, the travelling is continued in Step 1502, and the flow is terminated.

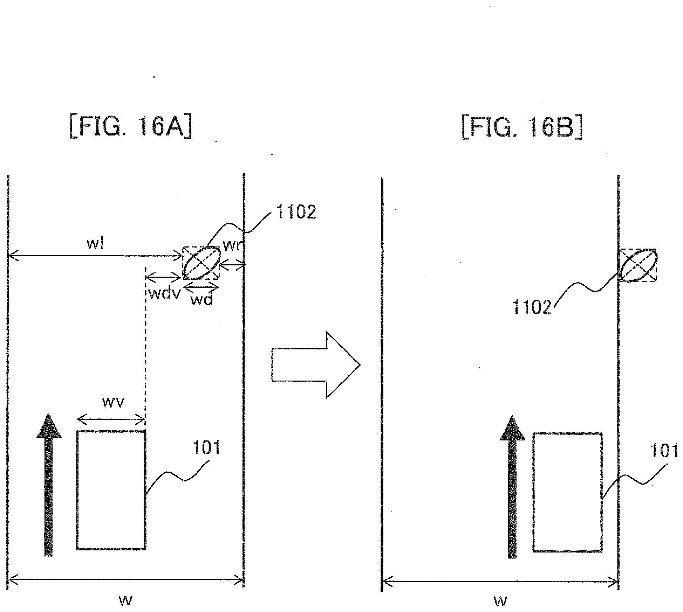

A method of changing the course will be further described with reference to FIGS. 16A and 16B. FIG. 16A depicts a scene in which the non-detection area 1102 is present in the route range. Here, the width of the route range is w, the width of the non-detection area 1102 is wd, the width of the vehicle 101 is wv, the distance between the right end of the non-detection area 1102 and the right end of the route range is wr, and the distance between the left end of the non-detection area 1102 and the left end of the route range is wl. In addition, the distance between the right end of the vehicle 101 and the left end of the non-detection area 1102 is wdv.

At this time, since wr is smaller than wl when wl and wr are compared with each other, it is considered that the non-detection area 1102 is set to a right side of the route range. The condition that the non-detection area 1102 can be set to be out of the route range is that wdv is larger than 0, and if the vehicle 101 is moved to the right by wd+wr, the non-detection area 1102 is out of the route range. FIG. 16B depicts this state.

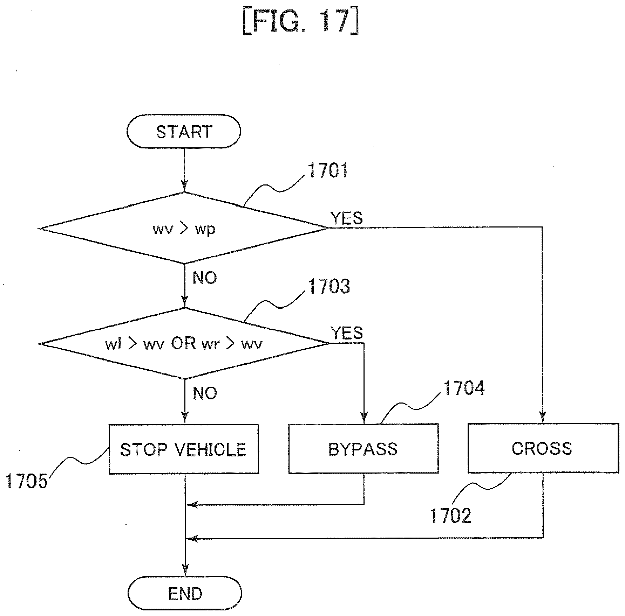

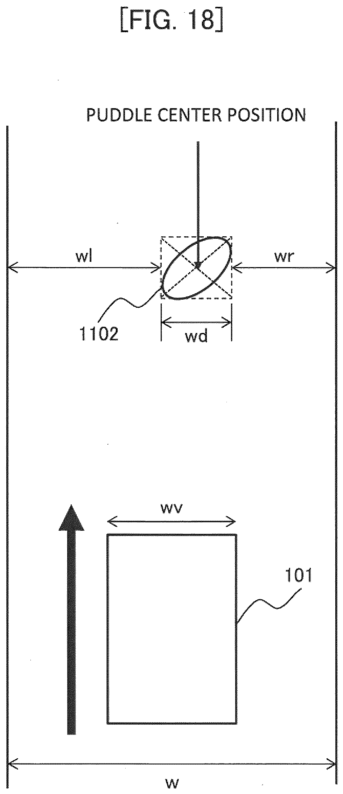

FIG. 17 is a flowchart indicating details of the processing (Step 1404 in FIG. 14) for deciding the action of the vehicle 101 in a case where the factor of the non-detection area is a puddle and assumes a scene depicted in FIG. 18. In FIG. 18, the distance between the left end of the non-detection area 1102 and the left end of the route range is wl, the distance between the right end of the non-detection area 1102 and the right end of the route range is wr, and the width of the vehicle 101 is wv. First, in Step 1701, it is determined whether or not the vehicle width wv is larger than a puddle width wd. In a case where the determination result in Step 1701 is Yes, since the vehicle 101 can cross the puddle, an action of crossing the non-detection area 1102 is decided in Step 1702, and the flow is terminated.

In a case where the determination result in Step 1701 is No, it is determined in Step 1703 whether or not the distance wl is larger than the vehicle width wv or whether or not the distance wr is larger than the vehicle width wv. In this determination, it is judged whether or not there is a space within the route range where the puddle can be bypassed, and in a case where the distance wl is larger than the vehicle width wv or the distance wr is larger than the vehicle width wv, the puddle can be bypassed within the route range.

In a case where the determination result in Step 1703 is Yes, an action of bypassing the non-detection area 1102 is decided in Step 1704, and the flow is terminated. In a case where the determination result in Step 1703 is No, an action of stopping the vehicle 101 is decided in Step 1705, and the flow is terminated.

### (Summary)

In the present embodiment, provided is a mining vehicle autonomous travel system including: an external detection sensor 108 that acquires a three-dimensional point group of surrounding environments of a vehicle 101; a position measurement sensor 202 that is attached to the vehicle 101; and a controller 203 to which signals of the external detection sensor 108 and the position measurement sensor 202 are input, in which the controller 203 has a point group map generation section 301 that associates the three-dimensional point group acquired by the external detection sensor 108 with a point group map, a sensor position change computation section 303 that computes a change in the position of the external detection sensor 108 on the basis of a measurement result of the vehicle position measurement sensor 202, and a non-detection area sensing section 302 that, in a case where the external detection sensor 108 cannot acquire the three-dimensional point group to be acquired, extracts an area of the point group map as a non-detection area, and in which the controller 203 has a non-detection area factor judgement section 304 that judges a factor of the non-detection area on the basis of whether or not the position of the non-detection area in the point group map changes according to the change in the position of the vehicle 101, and an action decision section 305 that decides an action of the vehicle 101 according to the factor of the non-detection area.

According to the present embodiment configured as described above, in a case where a non-detection area occurs in an area to be detected by the external detection sensor 108, it is possible to suppress the work efficiency of the mining vehicle 101 from being lowered by allowing the mining vehicle 101 to perform an appropriate action according to the factor of the non-detection area.

In addition, the action decision section 305 in the present embodiment decides whether to change a course so as to avoid a puddle, travel across the puddle, or stop the vehicle, according to the magnitude relation between the width wv of the vehicle 101 and the width wd of the puddle judged to be the factor of a non-detection area 1102, in a case where it is judged by the non-detection area factor judgement section 304 that the factor of the non-detection area 1102 is the puddle. Accordingly, in a case where the non-detection area of the external detection sensor 108 occurs due to a puddle, it is possible to suppress the work efficiency of the mining vehicle 101 from being lowered.

In addition, the external detection sensor 108 in the present embodiment includes a LiDAR 108 (laser ranging sensor), and the action decision section 305 decides whether to transmit an alarm to a control center 306 for managing the vehicle 101, change a course such that the non-detection area 1102 and a route range do not overlap each other in a detection range of the LiDAR 108, or stop the vehicle, in a case where it is judged by the non-detection area factor judgement section 304 that the factor of the non-detection area 1102 is dirt on an irradiation surface of the LiDAR 108. Accordingly, in a case where the non-detection area occurs due to dirt on the irradiation surface of the LiDAR 108, it is possible to suppress the work efficiency of the mining vehicle 101 from being lowered.

In addition, the external detection sensor 108 according to the present embodiment includes a LiDAR 108 (laser ranging sensor), and the point group map generation section 301 computes a maximum detection distance lmax according to a gradient of a road surface on the front side of the vehicle 101, and processes only three-dimensional point group data measured in a target range equal to or less than the maximum detection distance lmax. Accordingly, in a case where the non-detection area occurs in an area to be detected by the LiDAR 108, it is possible to suppress the work efficiency of the mining vehicle 101 from being lowered by allowing the mining vehicle 101 to perform an appropriate action according to the factor of the non-detection area.

Although the embodiment of the present invention has been described above in detail, the present invention is not limited to the above-described embodiment and includes various modified examples. For example, the above embodiment has been described in detail for the purpose of clearly describing the present invention, and the present invention is not necessarily limited to those having all the configurations described.

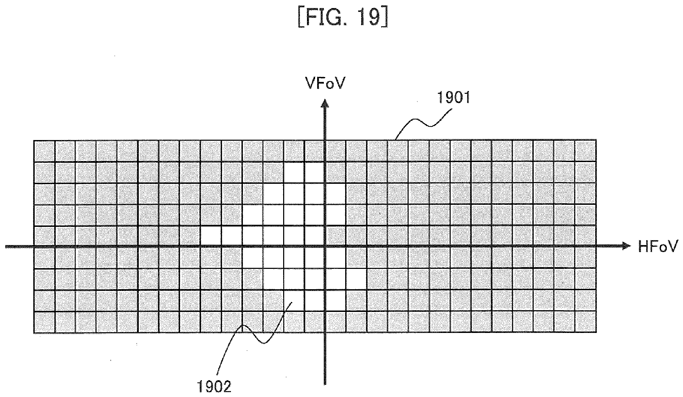

In the present embodiment, an example of creating the point group map by using the three-dimensional coordinates of the point group obtained by the LiDAR 108 has been described, but it is not necessary to use the three-dimensional coordinates for the point group map. The occurrence of the non-detection area means that there may highly possibly be present an irradiation direction in which no point group data can be obtained. Therefore, it is possible to create the point group map by using the irradiation angle of the LiDAR 108 if it is only determined whether or not the irradiation surface is dirty. FIG. 19 is an example of a point group map 1901 created using the vertical irradiation angle (VFoV) and the horizontal irradiation angle (HFoV) of the LiDAR 108. When there is dirt on the irradiation surface, a non-detection area 1902 appears on the point group map 1901. It is sufficient if the non-detection area 1902 is detected by the grouping method depicted in FIGS. 12A to 12H and registered in the registration buffer 1300.

In addition, a part or all of the above-described configurations, functions, processing sections, processing means, and the like may be realized by hardware by, for example, designing with an integrated circuit. In addition, the above-described configurations, functions, and the like may be realized by software by a processor interpreting and executing a program for realizing each of the functions. Information such as programs, tables, and files for realizing each function can be placed in a memory, a recording device such as a hard disk or an SSD (Solid State Drive), or a recording medium such as an IC card, an SD card, or a DVD. In addition, control lines and information lines considered to be necessary for explanation are depicted, and not all the control lines and information lines in the product are necessarily depicted. In practice, almost all the configurations may be considered to be connected to each other.

### Description of Reference Characters

- 101:: Mining vehicle
- 102:: Vehicle body
- 103:: Vessel
- 104:: Driver seat
- 105:: Driven wheel
- 106:: Driving wheel
- 108:: LiDAR (external detection sensor)
- 201:: Travel control system
- 202:: Vehicle position measurement sensor
- 203:: Controller
- 204:: Vehicle control unit
- 205:: CAN interface
- 206:: CAN bus
- 207:: Ethernet line
- 208:: Serial line
- 209:: Wheel speed sensor
- 210:: Memory
- 211:: Storage device
- 301:: Point group map generation section
- 302:: Non-detection area sensing section
- 303:: Sensor position change computation section
- 304:: Non-detection area factor judgement section
- 305:: Action decision section
- 306:: Control center
- 1101, 1102:: Non-detection area
- 1103:: Obstacle
- 1104:: Non-detection area
- 1201 to 1206:: Cell
- 1300:: Registration buffer
- 1301:: Number of non-detection areas
- 1303:: Number of detection times
- 1304:: Detection time
- 1305:: Static flag
- 1306:: Factor
- 1307:: Current barycentric coordinates
- 1308:: Cell coordinates
- 1309:: x coordinate
- 1310:: y coordinate
- 1311:: Global coordinates
- 1312:: x coordinate
- 1313:: y coordinate
- 1314:: Next time barycentric coordinates
- 1315:: Cell coordinates
- 1316:: x coordinate
- 1317:: y coordinate
- 1318:: Global coordinates
- 1319:: x coordinate
- 1320:: y coordinate
- 1321:: Configuration cell information
- 1322:: Number of configuration cells
- 1323:: Cell coordinates
- 1324:: x coordinate
- 1325:: y coordinate
- 1326:: Non-detection area information
- 1901:: Point group map
- 1902:: Non-detection area

## Claims

1. A mining vehicle autonomous travel system comprising:
an external detection sensor that acquires a three-dimensional point group of surrounding environments of a vehicle;
a position measurement sensor that is attached to the vehicle; and
a controller to which signals of the external detection sensor and the position measurement sensor are input,
the controller having
a point group map generation section that associates the three-dimensional point group acquired by the external detection sensor with a point group map,
a sensor position change computation section configured to compute a change in position of the external detection sensor on a basis of a measurement result of the position measurement sensor, and
a non-detection area sensing section that extracts, in a case where the external detection sensor is not able to acquire the three-dimensional point group to be acquired, an area of the point group map as a non-detection area, and
wherein the controller has
a non-detection area factor judgement section that judges a factor of the non-detection area on a basis of whether or not a position of the non-detection area in the point group map changes according to a change in position of the vehicle, and
an action decision section that decides an action of the vehicle according to the judgement result of the non-detection area factor judgement section.

2. The mining vehicle autonomous travel system according to claim 1,
wherein the action decision section decides, in a case where it is judged by the non-detection area factor judgement section that the factor of the non-detection area is a puddle, whether to change a course so as to avoid the puddle, travel across the puddle, or stop the vehicle according to a magnitude relation between a width of the vehicle and a width of the puddle judged to be the factor of the non-detection area.

3. The mining vehicle autonomous travel system according to claim 1,
wherein the external detection sensor includes a laser ranging sensor, and
the action decision section decides, in a case where it is judged by the non-detection area factor judgement section that the factor of the non-detection area is dirt on an irradiation surface of the laser ranging sensor, whether to transmit an alarm to a control center for managing the vehicle, change a course such that the non-detection area and a route range do not overlap each other in a detection range of the external detection sensor, or stop the vehicle.

4. The mining vehicle autonomous travel system according to claim 1,
wherein the external detection sensor includes a laser ranging sensor, and
the point group map generation section is configured to compute a maximum detection distance according to a gradient of a road surface on a front side of the vehicle, and process only three-dimensional point group data measured in a target range equal to or less than the maximum detection distance.
